# EUROPEAN PATENT APPLICATION

(11) **EP 0 808 597 A2**
(43) Date of publication of application: **26.11.1997**
(21) Application number: 97201447.6
(22) Date of filing: 14.05.1997
(51) Int. Cl.: A47J 31/00, A23F 5/26

(54) **Process for the production of coffee with pre-impregnation of the powder and associated automatic machine**

(30) Priority: 24.05.1996 IT MI961060
(71) Applicant: Grossi, Lucio, I-24100 Bergamo (IT)
(72) Inventor: Grossi, Lucio, I-24100 Bergamo (IT)
(74) Representative: Raimondi, Alfredo, Dott. Ing. Prof.

(57) **Abstract**

Process for the production of a beverage based on water and coffee extract by means of an automatic machine comprising at least one boiler (10), a three-way controllable valve (23) and a heat exchanger (14) arranged along a piping (20) supplying the infusion water to the coffee powder (31) contained in a cylindrical filter (30), comprising at least one stage involving pre-impregnation of the coffee powder (31) prior to the start of the coffee production cycle using water under pressure.

## Description

The present invention relates to a process and a machine for implementing the process in connection with the production of a beverage composed of water and extract of toasted and ground coffee (referred to below merely as "coffee"), comprising a stage involving pre-impregnation of the ground coffee with water at a high temperature and low pressure.

It is known that for the preparation of coffee, in particular espresso coffee, formed by hot water passed through ground coffee, use is made of apparatus of various kinds in which, in all cases, water at a high temperature and adeguate pressure is passed through a layer of coffee, ground to a suitably fineness, and the beverage thus obtained is collected.

In order to obtain espresso coffee of a superior quality, advantageously the infusion water should be at a temperature lower than boiling point, so as to avoid removing from the coffee powder, together with the aromatic components which give the beverage its flavour, also those undesirable components which are sometimes harmful and which only at temperatures close to the boiling point of water emerge from the coffee powder itself.

Therefore, both in public premises and in private dwellings, widespread use is made of automatic machines which, by supplying under pressure - but without boiling - the water which must pass through the coffee powder, enable such a beverage of superior quality to be obtained.

In the automatic machines of the the known type, in order to make coffee, the coffee powder is arranged inside a filter-carrying element provided with a filter for retaining the coffee powder and allowing the infusion to flow out, the powder is suitably pressed by a piston and hot water under pressure is supplied through this piston in order to form the infusion.

More particularly, this infusion cycle may be substantially considered as being divided into four separate stages:
- slow impregnation of the coffee powder with hot water under substantially no pressure or in any case at a very low pressure;
- raising the pressure up to the cycle value of about 8 atm;
- increasing the water throughput so that the said water passes through the filter and the coffee is therefore delivered;
- removing the discharge water left in the filter.

In order to obtain this working cycle, the coffee machines according to the known art are substantially based on the use of - in addition to the various mechanical operating components and electric or electronic control components - a three-way solenoid valve which, following the commands received from the cycle control circuits, causes opening or closing of one of the two deliveries so as to effect the supplying of the infusion water to the filter or, at the end of the cycle, discharging of the residual water left in the piping.

Said machines, however, have some drawbacks such that the production of the coffee infusion is not performed in an optimum manner since the said three-way valves and/or equivalent mechanical devices which control supplying of the infusion water to the powder, cause, upon opening of their deliveries, a rapid increase in the pressure with which the infusion water is supplied to the filter, consequently resulting in the elimination of the first stage involving slow impregnation of the powder, said stage, however, being of primary importance for correct use of the powder itself and hence the machine.

In addition to this, some of the drawbacks of said machines result from the heat exchangers used for heating the infusion water; said exchangers, in fact, in order to ensure sufficient heating of the water, must have large dimensions and are not emptied at the end of each cycle, with the consequent formation of lime scale which, accumulating, causes a reduction in the performance of the exchanger and errors in the quantity of infusion water supplied during each cycle.

In addition, the permanent presence of hot water inside the exchanger results in the formation of lime scale which impairs the performance thereof.

The technical problem which is posed, therefore, is that of providing a process for the preparation of a coffee, both of the so-called "espresso" type and the so-called "American" type, comprising at least one stage involving pre-impregnation of the powder with very hot water at a low pressure.

Within the scope of this problem a further requirement is to provide an associated automatic machine which implements said process and is composed of a limited number of parts, is low-cost and has a level of reliability, being compact and small-size, and which is designed for being controlled and operated by automatic means of the electronic type.

These results are obtained by the present invention which provides a process for the production of a beverage based on water and coffee extract by means of an automatic machine comprising at least one boiler, a pump for supplying the infusion water, a valve for distributing the latter and an infusion filter, said process comprising at least one stage involving pre-impregnation of the coffee powder performed with water at a high temperature and low pressure.

In a preferred method of implementation of the process, said low-pressure water is supplied from the boiler itself.

The present invention also relates to an automatic machine for the production of a beverage based on water and coffee extract, which comprises at least one duct provided with intercepting means which place in communication the water boiler with the piping supplying the infusion water to the coffee powder.

Further details may be obtained from the following description of an example of embodiment of the invention, provided with reference to the accompanying drawings, in which:
Figure 1 shows a diagram of the automatic machine for the production of coffee according to the present invention; and
Figure 2 shows a block diagram of the process for the production of coffee according to the present invention.

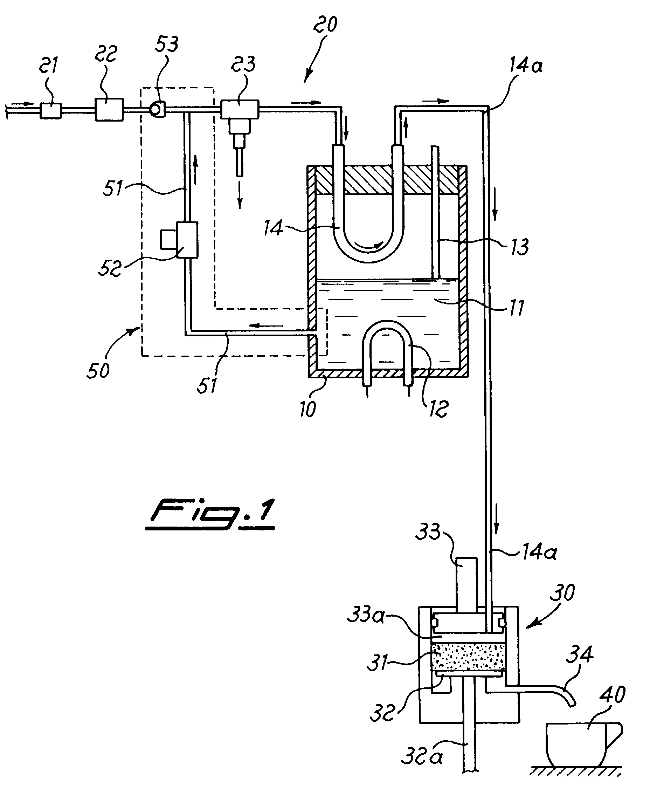

As shown in Figure 1, the automatic machine for the production of coffee according to the present invention comprises a boiler 10 containing water 11 which is heated via a resistance 12 and the level of which is controlled via a probe 13.

Both the resistance 12 and the probe 13 are connected to control devices of the machine known per se and not illustrated in the figures.

Inside the boiler 10 there is also arranged the heat exchanger 14 through which the infusion water is passed so as to bring it up to the desired operating temperature.

More in detail, the piping 20 for the infusion water comprises in a cascade arrangement: a volumetric metering device 21 which measures, at a low pressure, the quantity of water supplied, a pump 22 for supplying the water and a three-way valve 23 which, operated so as to open or discharge by control means, causes supplying of the water to the said heat exchanger 14 and from the latter to the cylinder 30 containing the coffee powder 31.

Said coffee powder 31 is supported by a disk 32 fixed to the top end of a rod 32a which can be operated so as to translate upwards and downwards via associated operating means not shown.

The cylinder 30 is closed at the top by a sealed piston 33 through which the piping 14a from the heat exchanger 14 passes. Said piston 33 performs compression of the powder and, after the latter has been compressed, is raised so as to leave an empty interspace 33a between its internal surface and the powder 31.

Said interface 33a has the dual function of allowing an accumulation of water which is thus able to be distributed over the entire surface of the tablet of compressed coffee powder and allowing expansion of the latter caused by the increase in volume due to impregnation with water.

As illustrated, the infusion cylinder 30 also has a spout 34 for delivery of the coffee to the cup 40.

In the machine according to the invention it is also envisaged that the boiler 10 is placed in communication with the piping 20 supplying the infusion water via a duct 51 which emerges from the boiler 10 and branches onto said piping 20, upstream of the three-way solenoid valve 23.

The said duct 51 is intercepted via a two-way solenoid valve 52 which can be operated so as to open/close via said control means.

Said connection between boiler 10 and piping 20 is denoted overall by 50 in Figure 1.

The piping supplying the infusion water has arranged along it, upstream of the connection point with the pipe 51 from the boiler, a one-way valve 53 for preventing the boiler water from being able to flow towards the pump 22.

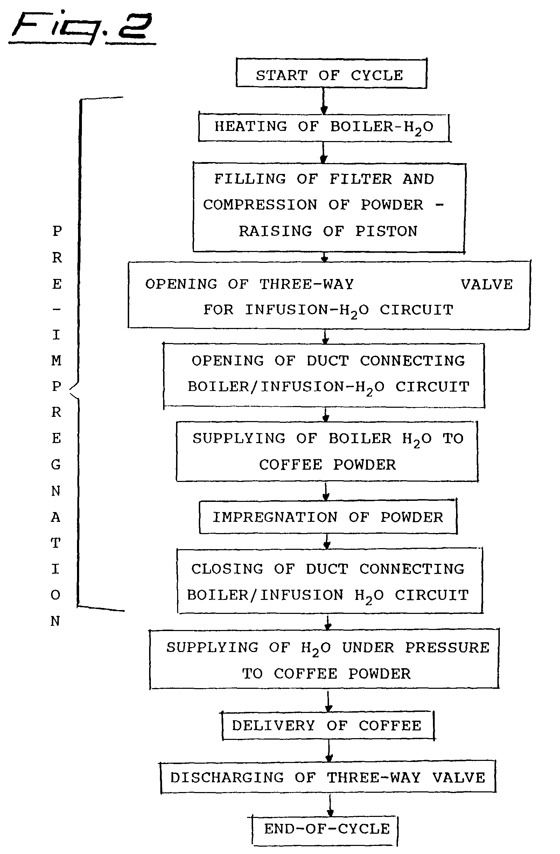

The process for the production of coffee by means of the machine described above comprises the following stages - summarised in the block diagram shown in Fig. 2 - which also correspond to operation of the machine itself:
- heating of the water 11 contained in the boiler 10 up to the predetermined temperature;
- filling of the cylinder 30 carrying the infusion filter 32 with the predetermined quantity of coffee powder 31;
- compression of the coffee powder 31 by means of the piston 33;
- raising of the piston 33 so as to create the interspace 33a;
- opening of the three-way valve 23 and two-way valve 52 of the duct 51 connecting the boiler 10 to the piping 20 for the infusion water;
- sending to the heat exchanger 14 and from the latter to the coffee powder, water 11 supplied from the boiler 10;
- closing, after a predetermined time, of the two-way valve 52 and hence the duct connecting the boiler to the circuit for the infusion water.

During this first operating stage, a reduced quantity of water at a high temperature and low pressure is sent to the coffee powder 31, said quantity being sufficient to fill completely the piping downstream of the three-way solenoid valve 23 and the interspace 33a comprised between piston 33 and powder 31 as well as to cause the desired stage of pre-impregnation of the powder which favours an improved yield in the extraction of the aromas from the powder itself and the formation of a dark and thick cream.

Once the pre-impregnation stage has been terminated, the actual infusion cycle commences, said cycle comprising the following stages:
- operation of the supply pump 21 which supplies the predetermined quantity of infusion water controlled by means of the volumetric metering device 22;
- collection of the coffee delivered via the spout 34;
- discharging, after a predetermined period of time, of the three-way solenoid valve 23, so as to obtain complete emptying of the piping 14a and the heat exchanger 14.

It is therefore obvious how the process and the associated automatic machine for the production of coffee according to the invention allow numerous advantages to be obtained compared to the known art; in particular, filling of the piping 20 supplying the infusion water with the boiler water produces two positive effects consisting in pre-heating of the entire circuit with the consequent possibility of reducing the dimensions of the heat exchanger and the preliminary filling of the entire piping prior to delivery of the infusion water, the quantity of which may consequently be calculated with precision and repeatability by the volumetric metering device, since any air pockets or the like are undoubtedly absent in the piping itself.

Many variants may be introduced as regards realization of the parts which make up the invention, without thereby departing from the protective scope of the present invention as defined by the claims which follow.

## Claims

1. Process for the production of a beverage based on water and extract of toasted and ground coffee, characterized in that it comprises at least one stage involving pre-impregnation of the coffee powder, prior to the start of the cycle for production of the beverage using water under pressure.

2. Process according to Claim 1, characterized in that the said pre-impregnation is performed with water at a high temperature and low pressure.

3. Process according to Claim 2, characterized in that the temperature of the pre-impregnation water is substantially comprised between 80°C and 105°C.

4. Process according to Claim 2, characterized in that the pressure of the pre-impregnation water is substantially comprised between 0.2 and 3.5 bar.

5. Process according to Claim 1, characterized in that the pre-impregnation stage comprises the following sequence:
- heating of the water up to the predetermined temperature;
- filling of the infusion cylinder with the predetermined quantity of coffee powder;
- compression of the powder by means of the piston;
- creation of an interspace between powder and piston;
- supplying of water at a high temperature and low pressure to the the heat exchanger and from the latter to the coffee powder;
- interruption, after a predetermined period of time, of the water supply.

6. Machine for the production of a beverage based on water and extract of toasted and ground coffee, comprising at least one boiler (10), a controllable three-way valve (23) and a heat exchanger (14) inserted along a piping (20) supplying the infusion water to the coffee powder (31) contained in a filter (30), characterized in that it comprises a duct (51) connecting the said boiler (10) to the said piping (20) supplying the infusion water to the filter (30).

7. Machine according to Claim 6, characterized in that said duct emerges in the piping (20) supplying the infusion water, in a position upstream of the said three-way valve (23).

8. Machine according to Claim 6, characterized in that a one-way valve (53) is provided upstream of the point of connection of the duct (51) to the piping (20).

9. Machine according to Claim 6, characterized in that an interceptor valve (52) which can be operated so as to open and close is arranged along said duct (51) coming from the boiler (10).

10. Machine according to Claim 6 and 9, characterized in that said interceptor valve (52) is of the two-way type.

11. Machine according to Claim 6, characterized in that said three-way valve (23) is arranged upstream of the heat exchanger (14).

12. Machine according to Claim 6, characterized in that the pre-impregnation water is preferably water from the boiler (10) of the machine itself.
